(19) **Europäisches Patentamt**

**European Patent Office**

**Office européen des brevets**

(11) **EP 1 003 034 A1**

(12) **EUROPEAN PATENT APPLICATION**

(43) Date of publication:
24.05.2000 Bulletin 2000/21

(51) Int. Cl.⁷: **G01N 27/38**, G01N 21/15

(21) Application number: **99121966.8**

(22) Date of filing: **09.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **18.11.1998 GB 9825156**

(71) Applicants:
- **YORKSHIRE WATER SERVICES LTD.**
  **Bradford, West Yorkshire BD6 2LZ (GB)**
- **SIEMENS PLC**
  **Bracknell, Berkshire RG12 8FZ (GB)**

(72) Inventors:
- **Proctor, John William**
  **Allerton, Bradford, BD15 7AE (GB)**
- **Vincent, David Robert**
  **Westmoors, Ferndown, Dorset, BH22 0PS (GB)**

(74) Representative:
**Walsh, David Patrick et al**
**Appleyard Lees,**
**15 Clare Road**
**Halifax HX1 2HY (GB)**

(54) **An investigation device**

(57) An investigation device for use in a potable water environment is described. The device includes pH varying means and investigation means. The pH varying means is capable of producing a pH of less than 7 in the surrounding aqueous environment and the pH varying means is sufficiently close to the investigation means to generate a pH environment of less than 7 in the vicinity of the investigation means. Typically, the investigation means incorporates a light transmitting surface. A method of investigating a potable water environment is also described.

The lowering of the pH prevents bio-fouling, in particular, bio-fouling of the light transmitting surface.

**FIG. 3**

## Description

The present invention relates to a potable water investigation method and a device for use in such a method.

It is known that numerous tests are carried out on potable water to determine various parameters. Such tests include turbidity measurements, colorimetry measurements, optical inspections and analysis of the concentration of chemicals present in the water.

During testing of potable water frequent problems occur due to the build up of biological materials on the measuring devices. This build up can affect the investigation causing erroneous measurements.

The problem is particularly acute where the investigation includes the use of a light transmitting surface such as is the case with turbidity or colorimetry analyses. In such cases, the biological material may build up on the optical surface causing errors in the measurements. In optical inspection devices, the build up of film on the optical sensor causes a reduction in the effectiveness of the device.

In the field of ammonia measurement a paper by M-Squared Technology Limited entitled "A New System for Total Ammonia Measurement" teaches an investigation device combined with an electrode cap capable of raising the pH to 11 to assist ammonia measurement. However, the document does not teach how the device may be adapted for anti-bio fouling devices.

According to a first aspect of the present invention there is provided an investigation device for use in a potable water environment comprising pH varying means and investigation means, the said pH varying means capable of producing a pH of less than 7 in the surrounding aqueous environment and the pH varying means being sufficiently close to the investigation means to generate a pH environment of less than 7 in the vicinity of the investigation means.

Preferably, the investigation means incorporates a light transmitting surface. The investigation means may incorporate an optical sensor. Advantageously, the use of the pH varying means in the presence of potable water prevents bio-fouling of the investigation means which is particularly advantageous in preventing bio-fouling of a light transmitting surface.

Preferably, the investigation means includes recording means for recording the investigated parameters. Preferably, the investigation means includes display means for displaying the investigated parameter.

According to a second aspect of the present invention there is provided a method of investigating a potable water environment comprising the steps of:-

exposing an investigation device fitted wit a pH varying means and investigation means to a potable water environment;

lowering the pH in the vicinity of the investigation means to below 7.0 using the pH varying means; and

carrying out the said investigation using the said investigation device.

Preferably, the method incorporates a recording step to record the investigation. Preferably, the device includes a display to display the result of the investigation. Preferably, the investigation may include the step of monitoring a potable water parameter and preferably, processing the parameter to produce a recording in a required form.

Preferably, the investigation means incorporates a light transmitting surface. The investigation means may incorporate an optical sensor.

The said investigation may be any operation which may be required to be carried out in relation to the water such as turbidity, absorbance, particle size profile, fibre optic inspections, contamination analysis or other checks or analyses carried out on potable water. By potable water is meant water which is fit for human consumption and which contains a ready supply of hypochlorite ions or dissolved chlorine. Advantageously, the step of lowering the pH in the vicinity of the investigation means has resulted in a marked decrease in biofouling of the investigation means caused by the build up of micro-organisms and other debris thereon. A particular advantage is found in optical analyses or checks such as colorimetry, turbidity or fibre optic inspections where it is essential to keep any light transmitting surface clean throughout the process. Accordingly, preferably, the pH varying means is capable of varying the pH in the vicinity of the light transmitting surface or optical sensor.

Preferably, the pH is varied in the vicinity of the pH varying means is less than 5.5 during the process. It is not certain why varying the pH in the vicinity of the investigation means results in a marked decrease in bio fouling thereof but this may be due to the presence of the hypochlorite ion in potable water which forms the hypochlorous acid (HOCl) species at low pH. The hypochlorous acid species is more biocidal than the hypochlorite ion and tests have shown that it may be as much as one hundred times more biocidal. Accordingly, by lowering the pH in the vicinity of the investigation means, the environment may become enriched in the hypochlorous acid species causing a reduction in biofouling. The above is offered as a potential explanation of the effectiveness of the invention and is only one possible explanation. It should not be taken to limit the invention in any way.

As indicated above, preferably, the investigation means includes a light transmitting surface. Such surfaces may be found on devices which use light transmission as part of the investigation. Such investigation means are found, for example, on turbidity measuring devices, absorbance analysers such as colorimetry analysers, particle size analysers and fibre optic instruments.

The pH varying means is typically a simple pH electrode. The simple pH electrode has an anode and a cathode and the investigation means is, preferably, placed in sufficiently close proximity to the anode to cause a lowering of the pH in the vicinity of the investigation means, most preferably, any light transmitting surface thereof.

Accordingly, when the electrode is activated, the pH in the region of the anode drops and causes a decrease in the proportion of bio-fouling in the region of the anode and, therefore, the investigation means.

According to a third aspect of the present invention there is provided the use of pH varying means in combination with investigation means, the said pH varying means capable of producing a pH of less than 7 and the pH varying means being sufficiently close to the investigation means to generate a pH environment of less than 7 in the vicinity of the investigation means, the said use being to reduce bio-fouling of the investigation means during use.

The third aspect of the invention may incorporate any one or more of the preferred features of the first and/or second aspects of the invention except where such features are mutually exclusive.

An embodiment of the invention will now be described, by way of example, with reference to the accompanying drawings in which:-

figure 1 shows a schematic view of the anode and cathode of the pH varying means of the present invention in a potable water environment.

figure 2 shows a curve of the pH equilibrium between hypochlorous acid and the hypochlorite anion;

figure 3 shows a schematic view of a fibre optic investigation device in accordance with the present invention;

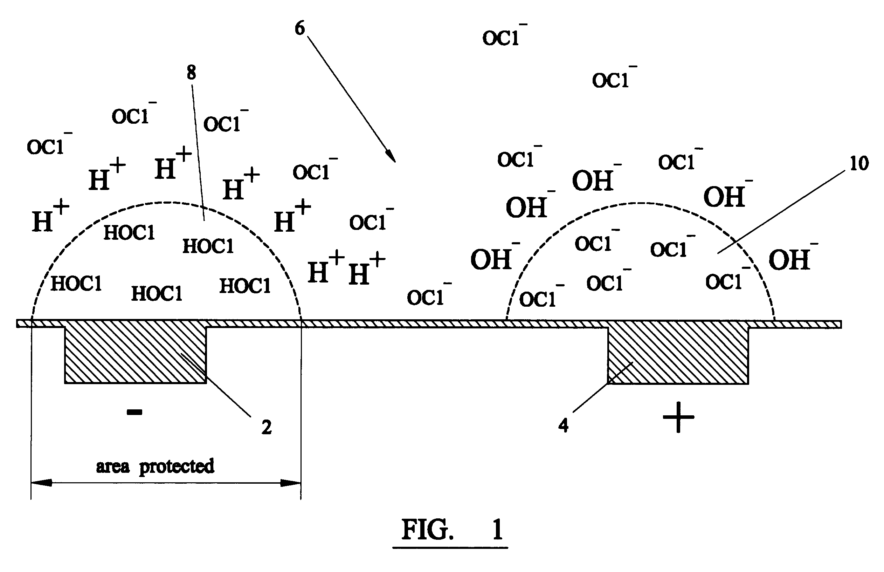

Referring to figure 1, a schematic view of an electrode operating in a potable water environment displays an anode 2 spaced from a cathode 4 operating in potable water environment 6. Both the anode and the cathode have a limited sphere of influence of perhaps 1-2mm but it will be noted that there is an increase in the concentration of the hypochlorous acid species in the hemispherical region 8 immediately surrounding the anode and a corresponding increase in the concentration of hypochlorite anion in the cathode hemispherical region 10 immediately surrounding the cathode 4. Furthermore, there is a cloud of protons immediately surrounding the periphery of the hemispherical region 8 and a corresponding cloud of hydroxy ions immediately surrounding the cathode region 10.

Hydrolysis of aqueous solutions results in changes in pH locally around the electrodes, specifically opposingly charged proton and hydroxyl clouds respectively surround the cathode and anode. It is these clouds that alter the pH in the immediate vicinity of the electrodes and any surface in close proximity is subjected to this change in pH.

In the presence of chlorine disinfectant the action of that disinfectant is potentially enhanced leading to removal of biofilms and their attendant fouling products.

Chlorine dissolved in water reacts as per equation 1

$$Cl_2 + H_2O \leftrightarrow HCl + HOCl \qquad (1)$$

The hypochlorous acid [HOCl] so formed dissociates as defined by equation 2 and is pH dependant. A decrease in pH retards dissociation.

$$HOCl \leftrightarrow H^+ + OCl^- \qquad (2)$$

The species known as hypochlorous acid [HOCl] is the more biocidal of the two [~ 100 times] and so any residual OCl⁻ around the cathode is converted to the much more effective HOCl form within the sphere of the cloud 8. Any surface within this sphere will experience an increase in the proportion of HOCl.

Any attached biofilms will also experience formation of HOCl from diffused OCl⁻ within them as well as at the surface due to the high diffusion rate of protons. However, in traditional disinfectant removal of fouling, the active agents must attack the outer layers of the film resulting in a degree of shielding being available to embedded organisms.

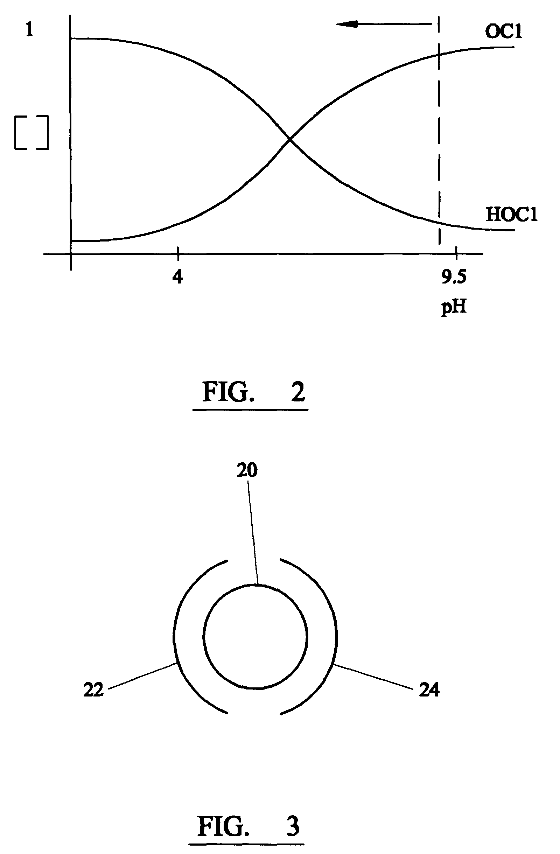

Figure 2 shows the pH relationship of the equilibrium between hypochlorous acid and the hypochlorite ion. It will be easily seen that the presence of hypochlorous acid at potable water pH levels of 7-9 is relatively low but at pH levels less than 7, the concentration of hypochlorous acid increases to significant levels until at pH less than 4 it is the dominant species in solution. Accordingly, the increased bio-fouling at low pH levels in potable water may be due to the increased concentration of hypochlorous acid at such pH's.

Referring to figure 3, the end of a fibre optic cable 20 is located in close proximity to an anode 22 and a cathode 24 of an electrode. Both the anode and cathode electrode are arcuate in shape so as to follow closely the circular outline of the fibre optic cable 20. The proximity of the fibre optic cable to the anode 22 in a potable water environment has been found to decrease bio-fouling of the fibre optic cable within 1-2mm of the anode.

It is envisaged that specific sensors incorporating the invention may have an extension piece for MSM type meters that will allow up to two sensors to easily and cheaply be installed in specific MSM chambers or on domestic/commercial supplies with little or no modification. This will enable cheap mobile or permanent WQ installations to be achieved. These may be used for continuous monitoring, complaint investigations or rehabilitation investigations.

The potential investigation means for inclusion in the sensors include:-

a) colorimetry using diode and fibre optic techniques;

b) turbidity using diode and fibre optic techniques.

The outputs from such equipment may be logged by multiplexing the parameter values onto a single analogue channel such as the flow input to a non-specific logger.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An investigation device for use in a potable water environment comprising pH varying means and investigation means, the said pH varying means capable of producing a pH of less than 7 in the surrounding aqueous environment and the pH varying means being sufficiently close to the investigation means to generate a pH environment of less than 7 in the vicinity of the investigation means.

2. An investigation device according to claim 1, wherein the investigation means incorporates a light transmitting surface.

3. An investigation device according to claim 1 or 2, wherein the investigation means incorporates an optical sensor.

4. A method of investigating a potable water environment comprising the steps of:- exposing an investigation device fitted with a pH varying means and investigation means to a potable water environment; lowering the pH in the vicinity of the investigation means to below 7.0 using the pH varying means; and carrying out the said investigation using the said investigation device.

5. A method according to claim 4, wherein the investigation includes the step of monitoring a potable water parameter.

6. An investigation device according to any of claims 1-3, wherein the pH varying means is capable of varying the pH in the vicinity of the light transmitting surface or optical sensor.

7. A method according to any of claims 4 or 5, wherein the pH is varied in the vicinity of the pH varying means and the proximity of the pH varying means to the investigation means is such as to cause a substantial reduction in bio-fouling around the investigation means.

8. A method according to claim 4, 5 or 7, wherein the pH is varied in the vicinity of the pH varying means to be less than 5.5 during the process.

9. A device according to any claims 1-3 or 6, wherein the device is selected from turbidity measuring devices, absorbance analysers such as colorimetry analysers, particle size analysers and fibre optic instruments.

10. A device according to any of claims 1-3, 6 or 9, wherein the pH varying means provides a pH environment around the investigation means sufficient to substantially reduce bio-fouling thereof.

11. An investigation device according to any of claims 1-3, 6, 9 or 10, wherein the pH varying means is a simple pH electrode with an anode and a cathode.

12. An investigation device according to any of claims 1-3, 6 or 9-11, wherein the investigation means is placed in sufficiently close proximity to the anode to cause a lowering of the pH in the vicinity of the investigation means.

13. An investigation device according to any of claims 1-3, 6 or 9-12, wherein the investigation means is placed in sufficiently close proximity to the anode to cause a lowering of the pH in the vicinity of any light transmitting surface of the investigation means.

14. The use of pH varying means in combination with investigation means, the said pH varying means capable of producing a pH of less than 7 and the pH varying means being sufficiently close to the investigation means to generate a pH environment of less than 7 in the vicinity of the investigation means, the said use being to reduce bio-fouling of the investigation means during use.

FIG. 1

**FIG. 2**

**FIG. 3**

European Patent Office

**EUROPEAN SEARCH REPORT**

Application Number

EP 99 12 1966

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 633 460 A (MANMARU KYOKO ET AL) 27 May 1997 (1997-05-27) * abstract * | 1,4,7,8, 10-12,14 | G01N27/38 G01N21/15 |
| Y | * column 6, line 33 - line 60 * | 2,3,6,9, 13 | |
| | * column 9, line 36 - line 39 * * column 9, line 52 - line 56 * * column 12, line 6 - line 8 * * figure 1 * | | |
| Y | PATENT ABSTRACTS OF JAPAN vol. 1996, no. 09, 30 September 1996 (1996-09-30) & JP 08 122245 A (NEC CORP), 17 May 1996 (1996-05-17) * abstract * | 2,3,6,9, 13 | |
| A | US 4 345 981 A (BENNETT JOHN E ET AL) 24 August 1982 (1982-08-24) * column 2, line 7 - line 17 * * column 3, line 7 - line 9 * | 1,4,14 | |
| | | | TECHNICAL FIELDS SEARCHED (Int.Cl.7) |
| A | EP 0 369 557 A (MITSUBISHI HEAVY IND LTD) 23 May 1990 (1990-05-23) * column 7, line 53 - column 8, line 1 * | 1,4,14 | G01N B08B B63B |

The present search report has been drawn up for all claims

| Place of search | Date of completion of the search | Examiner |
|---|---|---|
| THE HAGUE | 16 February 2000 | Verdoodt, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 12 1966

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2000

| Patent document cited in search report | | Publication date | Patent family member(s) | | Publication date |
|---|---|---|---|---|---|
| US 5633460 | A | 27-05-1997 | JP | 2713192 B | 16-02-1998 |
| | | | JP | 8082609 A | 26-03-1996 |
| | | | JP | 8193965 A | 30-07-1996 |
| JP 08122245 | A | 17-05-1996 | JP | 2746145 B | 28-04-1998 |
| US 4345981 | A | 24-08-1982 | US | 4256556 A | 17-03-1981 |
| | | | AR | 225022 A | 15-02-1982 |
| | | | AU | 525591 B | 11-11-1982 |
| | | | AU | 5310979 A | 29-05-1980 |
| | | | BR | 7907603 A | 05-08-1980 |
| | | | CA | 1156178 A | 01-11-1983 |
| | | | DD | 147372 A | 01-04-1981 |
| | | | DK | 499079 A | 25-05-1980 |
| | | | EP | 0012000 A | 11-06-1980 |
| | | | ES | 486304 A | 01-11-1980 |
| | | | FI | 793694 A,B, | 25-05-1980 |
| | | | IL | 58776 A | 15-05-1983 |
| | | | IN | 152512 A | 04-02-1984 |
| | | | JP | 1046595 B | 09-10-1989 |
| | | | JP | 1564406 C | 12-06-1990 |
| | | | JP | 55079880 A | 16-06-1980 |
| | | | NO | 793808 A | 28-05-1980 |
| | | | NZ | 192219 A | 16-03-1982 |
| | | | PH | 15617 A | 28-02-1983 |
| | | | PL | 219819 A | 28-07-1980 |
| | | | PT | 70489 A | 01-12-1979 |
| | | | YU | 284779 A | 31-08-1982 |
| | | | ZA | 7906358 A | 26-11-1980 |
| EP 0369557 | A | 23-05-1990 | JP | 2225574 A | 07-09-1990 |
| | | | JP | 2647498 B | 27-08-1997 |
| | | | AU | 618145 B | 12-12-1991 |
| | | | AU | 4455289 A | 31-05-1990 |
| | | | CA | 2001785 A,C | 14-05-1990 |
| | | | DK | 539889 A | 15-05-1990 |
| | | | FI | 95896 B | 29-12-1995 |
| | | | KR | 9308997 B | 18-09-1993 |
| | | | NO | 179414 B | 24-06-1996 |
| | | | US | 5088432 A | 18-02-1997 |

For more details about this annex : see Official Journal of the European Patent Office, No. 12/82